# EUROPEAN PATENT SPECIFICATION

(11) **EP 0 684 766 B1**
(45) Date of publication and mention of the grant of the patent: **16.04.1997**
(21) Application number: 94909081.5
(22) Date of filing: 17.02.1994
(51) Int. Cl.: A01N 57/20

(54) **HERBICIDAL COMPOSITIONS**
HERBIZIDE ZUSAMMENSETZUNGEN
COMPOSITIONS HERBICIDES

(30) Priority: 20.02.1993 DE 4305542
(43) Date of publication of application: 06.12.1995
(73) Proprietor: Hoechst Schering AgrEvo GmbH, 13509 Berlin (DE)
(72) Inventor: MACH, Martin, D-13507 Berlin (DE); FISCHER, Bernd, D-38300 Wolfenbüttel (DE); BOHNER, Jürgen, D-13439 Berlin (DE); REES, Richard, D-13465 Berlin (DE)
(74) Representative: Waldman, Ralph David
(86) International application number: EP9400571
(87) International publication number: WO9418837

(56) References cited:
- EP-A- 0 311 135
- WO-A-92/20675
- WO-A-93/04585
- US-A- 2 927 014
- US-A- 3 929 450

## Description

### Field of the invention

This invention relates to new herbicidal compositions and methods of combating weeds.

### Prior Art

US Patent 3,929,450 discloses synergistic herbicidal mixtures comprising phosphonomethyl glycine derivatives (including glyphosate) and phosphonate compounds of the formula R₁P(O)MM₁, wherein R₁ may be a C₁-C₂₀ alkyl radical and M,M₁, inter alia, lower alkoxy.

US Patent No 2927014 discloses phosphonates and phosphinates having herbicidal activity. We have now found that combinations of one specific compound according to the US Patent with certain known herbicides are surprisingly beneficial and synergistic.

### Description

The invention provides new herbicidal compositions with synergistic activity that comprise as active materials a mixture of
(a) O,O-bis(2-ethylhexyl)(2-ethylhexyl)phosphonate, and
(b) a herbicide selected from the group of
   thidiazimin (b₁),
   2-[7-fluoro-3-oxo-4-(2-propynyl)-3,4-dihydro-2H-1,4-benzoxazin-6-yl]perhydroimidazo[1,5-a]pyridine-1,3-dione (b₂),
   N-(4-chloro-2-ethyl-6-fluorobenzothiazol-7-yl)-1-cyclohexene-1,2-dicarboximide (b₃),
   amidosulfuron (b₄),
   mecoprop-P (b₅),
   isoproturon (b₆),
   chlorotoluron (b₇),
   benazolin-ethyl (b₈),
   glyphosate (b₉),
   metsulfuron (b₁₀),
   tribenuron (b₁₁),
   thifensulfuron (b₁₂), and
   bifenox (b₁₃).

The short names quoted for these compounds are the non-proprietary common names and the chemical structure can be found for example by reference to the "Pesticide Manual", ninth edition, 1991, published by the British Crop Protection Council. Of those not mentioned in the Pesticide Manual the full chemical names are as follows:
- thidiazimin -: 6-(6,7-dihydro-6,6-dimethyl-3H,5H-pyrrolo[2,1-c][1,2,4]thiadiazol-3-ylidenimino)-7-fluoro-4-(2-propynyl)-2H-1,4-benzoxazin-3(4H)-one.
- amidosulfuron -: 3-[4,6-dimethoxypyrimidin-2-yl)-1-(N-methyl-N-methylsulfonyl-aminosulfonyl)urea, (disclosed in EP 131 258).

Compounds b₁ and b₂ are disclosed in EP 311 135 and compound b₃ is disclosed in PCT WO 9220675.

Mecoprop-P is usually present as a salt, especially the potassium salt. Glyphosate is usually present as the isopropylammonium salt but can also be present for example as the trimesium (trimethylsulfonium) salt. Metsulfuron, tribenuron and thifensulfuron are usually present as the methyl esters.

The combination of (a) and (b) can be used for example against the following plant species:

Dicotyledonous weeds of the species *Sinapis, Lepidium, Galium, Stellaria, Matricaria, Anthemis, Galinsoga,* *Chenopodium, Brassica, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Lamium, Veronica, Abutilon, Datura, Viola, Galeopsis, Papaver, Centaurea* and *Chrysanthemum* and also monocotyledonous weeds of the species *Avena, Alopecurus, Echinochica, Setaria, Panicum, Digitaria, Poa, Eleusine, Brachiaria, Lolium, Bromus, Cyperus, Agropyron, Sagittaria, Monocharia, Fimbristylis, Eleocharis, Ischaemum* and *Apera.*

The combinations are applied post-emergently. The total amount of active ingredients used in the mixture lies between 10 and 1000 g/ha.

The weight ratio of component a) to b) is generally between 20:1 and 1:20, preferably between 10:1 and 1:1.

An improvement in the intensity and speed of action can be obtained, for example, by addition of suitable adjuvants, such as organic solvents, wetting agents and oils. Such additives may allow a decrease in the dose.

The designated active ingredients or their mixtures can suitably be used, for example, as powders, dusts, granules, solutions, emulsions or suspensions, with the addition of liquid and/or solid carriers and/or diluents and, optionally, binding, wetting, emulsifying and/or dispersing adjuvants.

Suitable liquid carriers are, for example aliphatic and aromatic hydrocarbons, such as benzene, toluene, xylene, cyclohexanone, isophorone, dimethyl sulfoxide, dimethylformamide and other mineral-oil fractions and plant oils.

Suitable solid carriers include mineral earths, e.g. bentonite, silica gel, talc, kaolin, attapulgite, limestone, silicic acid and plant products, e.g. flours.

As surface-active agents there can be used for example calcium lignosulfonate, polyoxyethylenealkylphenyl ethers, naphthalenesulfonic acids and their salts, phenolsulfonic acids and their salts, formaldehyde condensates, fatty alcohol sulfates, as well as substituted benzenesulfonic acids and their salts.

The percentage of the active ingredient(s) in the various preparations can vary within wide limits. For example, the compositions can contain about 10 to 90 percent by weight active ingredients, and about 90 to 10 percent by weight liquid or solid carriers, as well as, optionally up to 20 percent by weight of surfactant.

The agents can be applied in customary fashion, for example with water as the carrier in spray mixture volumes of approximately 100 to 1,000 l/ha. The agents can be applied using low-volume or ultra-low-volume techniques or in the form of so-called microgranules.

The preparation of these formulations can be carried out in known manner, for example by milling or mixing processes. Optionally, individual components can be mixed just before use for example by the so-called commonly used tank-mixing method.

The following Examples illustrate the use of compositions of the invention.

Since the phosphonate (a) when applied on its own shows no herbicidal activity, the expected value for an additive effect according to Colby (S R Colby "Calculating Synergistic and Antagonistic Response to Herbicide Combinations", Weeds, 15/1, 1967 pages 20 to 22) corresponds to the activity level of the herbicides b₁ - b₁₃ without addition of the phosphonate (a).
In the Examples
GALAP = *Galium aparine*
VIOAR = *Viola arvensis*
MATCH = *Matricaria chamomilla*
STEME = *Stellaria media*
BRSNW = *Brassica napus*

Compounds b₁₀, b₁₁ and b₁₂ are used as the methyl ester, compound b₉ as the isopropylammonium salt and compound b₅ as the potassium salt.

The Examples are field tests carried out post-emergently in the Autumn on winter cereals. The compositions are evenly applied to the plants as suspensions using a water amount of 500 litres per hectare. For Examples 1-3 and 13 evaluation was carried out 15 days after application and for Examples 4-12, evaluation was carried out 30 days after application. The evaluation of the individual components (a) and (b) as well as their mixtures was carried out on a scale where 0 is no damage and 100 is complete destruction of the plants.

| Example 1 | | | | | |
|---|---|---|---|---|---|
| Herbicide | Phosphonate | % Control | | | |
| | | g ai/ha | GALAP | MATCH | STEME |
| (b₁) | | 10 | 47 | 50 | 70 |
| | (a) | 24 | 0 | 0 | 0 |
| | (a) | 48 | 0 | 0 | 0 |
| (b₁) + | (a) | 10 + 24 | 84 | 68 | 87 |
| (b₁) + | (a) | 10 + 48 | 95 | 77 | 90 |

| Example 2 | | | | | | |
|---|---|---|---|---|---|---|
| Herbicide | Phosphonate | % Control | | | | |
| | | g ai/ha | GALAP | VIOLA | STEME | MATCH |
| (b₂) | | 15 | 35 | 37 | 27 | 90 |
| | (a) | 48 | 0 | 0 | 0 | 0 |
| | (a) | 95 | 0 | 0 | 0 | 0 |
| (b₂) | + (a) | 15 + 48 | 72 | 94 | 30 | 100 |
| (b₂) | + (a) | 15 + 95 | 77 | 95 | 35 | 99 |

| Example 3 | | | | | | |
|---|---|---|---|---|---|---|
| Herbicide | Phosphonate | % Control | | | | |
| | | g ai/ha | GALAP | VIOLA | STEME | MATCH |
| (b₃) | | 15 | 33 | 83 | 20 | 99 |
| | (a) | 48 | 0 | 0 | 0 | 0 |
| | (a) | 95 | 0 | 0 | 0 | 0 |
| (b₃) | + (a) | 15 + 48 | 67 | 92 | 23 | 100 |
| (b₃) | + (a) | 15 + 95 | 73 | 90 | 35 | 100 |

| Example 4 | | | | | | |
|---|---|---|---|---|---|---|
| Herbicide | Phosphonate | % Control | | | | |
| | | g ai/ha | GALAP | VIOLA | STEME | MATCH |
| (b₄) | | 12 | 42 | 20 | 40 | 55 |
| | (a) | 48 | 0 | 0 | 0 | 0 |
| (b₄) + | (a) | 12 + 48 | 60 | 48 | 63 | 70 |

| Example 5 | | | | | | |
|---|---|---|---|---|---|---|
| Herbicide | Phosphonate | % Control | | | | |
| | | g ai/ha | GALAP | VIOLA | STEME | MATCH |
| (b₅) | | 600 | 53 | 18 | 60 | 63 |
| | (a) | 48 | 0 | 0 | 0 | 0 |
| (b₅) + | (a) | 600 + 48 | 70 | 25 | 73 | 87 |

| Example 6 | | | | | | |
|---|---|---|---|---|---|---|
| Herbicide | Phosphonate | % Control | | | | |
| | | g ai/ha | GALAP | VIOLA | STEME | MATCH |
| (b₆) | | 750 | 13 | 30 | 55 | 83 |
| | (a) | 48 | 0 | 0 | 0 | 0 |
| (b₆) + | (a) | 750 + 48 | 20 | 37 | 63 | 90 |

| Example 7 | | | | | | |
|---|---|---|---|---|---|---|
| Herbicide | Phosphonate | % Control | | | | |
| | | g ai/ha | GALAP | VIOLA | STEME | MATCH |
| (b₇) | | 750 | 15 | 23 | 85 | 88 |
| | (a) | 48 | 0 | 0 | 0 | 0 |
| (b₇) + | (a) | 750 + 48 | 23 | 37 | 93 | 95 |

| Example 8 | | | | | |
|---|---|---|---|---|---|
| Herbicide | Phosphonate | % Control | | | |
| | | g aj/ha | GALAP | VIOLA | STEME |
| (b₈) | | 200 | 18 | 22 | 88 |
| | (a) | 48 | 0 | 0 | 0 |
| (b₈) + | (a) | 200 + 48 | 33 | 30 | 95 |

| Example 9 | | | | | | |
|---|---|---|---|---|---|---|
| Herbicide | Phosphonate | % Control | | | | |
| | | g ai/ha | GALAP | VIOLA | STEME | MATCH |
| (b₉) | | 50 | 20 | 10 | 25 | 28 |
| | (a) | 48 | 0 | 0 | 0 | 0 |
| (b₉) + | (a) | 50 + 48 | 33 | 15 | 38 | 40 |

| Example 10 | | | | | | |
|---|---|---|---|---|---|---|
| Herbicide | Phosphonate | % Control | | | | |
| | | g ai/ha | GALAP | VIOLA | STEME | MATCH |
| (b₁₀) | | 3 | 10 | 50 | 96 | 97 |
| | (a) | 48 | 0 | 0 | 0 | 0 |
| (b₁₀) + | (a) | 3 + 48 | 25 | 58 | 100 | 100 |

| Example 11 | | | | | | |
|---|---|---|---|---|---|---|
| Herbicide | Phosphonate | % Control | | | | |
| | | g ai/ha | GALAP | VIOLA | STEME | MATCH |
| (b₁₁) | | 15 | 47 | 40 | 78 | 88 |
| | (a) | 48 | 0 | 0 | 0 | 0 |
| (b₁₁) + | (a) | 15 + 48 | 55 | 52 | 88 | 95 |

| Example 12 | | | | | | |
|---|---|---|---|---|---|---|
| Herbicide | Phosphonate | % Control | | | | |
| | | g ai/ha | GALAP | VIOLA | STEME | MATCH |
| (b₁₂) | | 24 | 58 | 48 | 70 | 88 |
| | (a) | 48 | 0 | 0 | 0 | 0 |
| (b₁₂) + | (a) | 24 + 48 | 73 | 52 | 75 | 96 |

| Example 13 | | | | | | |
|---|---|---|---|---|---|---|
| Herbicide | Phosphonate | % Control | | | | |
| | | g ai/ha | GALAP | VIOLA | STEME | MATCH |
| (b₁₃) | | 500 | 78 | 95 | 15 | 63 |
| | (a) | 48 | 0 | 0 | 0 | 0 |
| (b₁₃) + | (a) | 500 + 48 | 88 | 98 | 20 | 78 |

## Claims

1. Herbicidal compositions with synergistic activity that comprise as active materials a mixture of
(a) O,O-bis(2-ethylhexyl)(2-ethylhexyl)phosphonate, and
(b) a herbicide selected from the group of
thidiazimin (b₁),
2-[7-fluoro-3-oxo-4-(2-propynyl)-3,4-dihydro-2H-1,4-benzoxazin-6-yl]perhydroimidazo[1,5-a]pyridine-1,3-dione (b₂),
N-(4-chloro-2-ethyl-6-fluorobenzothiazol-7-yl)-1-cyclohexene-1,2-dicarboximide (b₃),
amidosulfuron (b₄),
mecoprop-P (b₅),
isoproturon (b₆),
chlorotoluron (b₇),
benazolin-ethyl (b₈),
glyphosate (b₉),
metsulfuron (b₁₀),
tribenuron (b₁₁),
thifensulfuron (b₁₂), and
bifenox (b₁₃).

2. A composition according to claim 1 in which the weight ratio of (a) to (b) is between 20:1 to 1:20.

3. A composition according to claim 2 in which the weight ratio of (a) to (b) is between 10:1 to 1:1.

4. A method of combating weeds which comprises applying to the weeds and their locus a composition as claimed in any one of the preceding claims.

5. A method according to claim 4 in which there is used a total amount of active ingredients of 10 to 1000 g/ha.

## Patentansprüche

1. Herbizide Zusammensetzungen mit synergistischer Wirkung, die als aktive Bestandteile eine Mischung aus
(a) O,O-Bis(2-ethylhexyl)-(2-ethylhexyl)-phosphonat und
(b) einem Herbizid aus der Gruppe
Thidiazimin (b₁),
2-[7-Fluor-3-oxo-4-(2-propinyl)-3,4-dihydro-2H-1,4-benzoxazin-6-yl]-perhydroimidazo-[1,5-a]pyridin-1,3-dion (b₂),
N-(4-Chlor-2-ethyl-6-fluorbenzothiazol-7-yl)-1-cyclohexen-1,2-dicarbimid (b₃),
Amidosulfuron (b₄),
Mecoprop-P (b₅),
Isoproturon (b₆),
Chlorotoluron (b₇)
Benazolin-ethyl (b₈),
Glyphosate (b₉),
Metsulfuron (b₁₀),
Tribenuron (b₁₁),
Thifensulfuron (b₁₂) und
Bifenox (b₁₃).
enthalten.

2. Zusammensetzung gemäss Anspruch 1, dadurch gekennzeichnet, dass das Gewichtverhältnis von (a) zu (b) zwischen 20:1 und 1:20 liegt.

3. Zusammensetzung gemäss Anspruch 2, dadurch gekennzeichnet, dass das Gewichtverhältnis von (a) zu (b) zwischen 10:1 und 1:1 liegt.

4. Verfahren zur Unkrautbekämpfung, dadurch gekennzeichnet, dass man auf das Unkraut und dessen Lebensraum eine Zusammensetzung gemäss einem der vorstehenden Ansprüche einwirken lässt.

5. Verfahren gemäss Anspruch 4, dadurch gekennzeichnet, dass die angewendete Gesamtmenge Aktivsubstanz 10 bis 1000 g/ha beträgt.

## Revendications

1. Compositions herbicides ayant une activité synergique qui comprennent comme matières actives un mélange de
a) O,O-bis(2-éthylhexyl)(2-éthylhexyl)phosphonate, et
b) un herbicide pris dans le groupe comportant
thiadiazimine (b₁),
2-[7-fluoro-3-oxo-4-(2-propynyl)-3,4-dihydro-2H-1,4-benzoxazin-6-yl]perhydroimidazo(1,5-a]pyridine-1,3-dione (b₂),
N-(4-chloro-2-éthyl-6-fluorobenzothiazol-7-yl)-1-cyclohexène-1,2-dicarboximide (b₃),
amidosulfuron (b₄),
mecoprop-P (b₅),
isoproturon (b₆),
chlorotoluron (b₇),
benazolin-éthyl (b₈),
glyphosate (b₉),
metsulfuron (b₁₀),
tribenuron (b₁₁),
thifensulfuron (b₁₂), et
biphenox (b₁₃).

2. Composition selon la revendication 1 dans laquelle le rapport pondéral de (a) à (b) est compris entre 20:1 et 1:20.

3. Composition selon la revendication 2 dans laquelle le rapport pondéral de (a) à (b) est compris entre 10:1 et 1:1.

4. Méthode de lutte contre les mauvaises herbes qui comprend l'application aux mauvaises herbes et leurs locus d'une composition telle que revendiquée dans l'une des revendications précédentes.

5. Méthode selon la revendication 4 dans laquelle on utilise une dose totale d'ingrédients actifs de 10 à 1000 g/ha.
